# EUROPEAN PATENT APPLICATION

(11) **EP 3 680 197 A1**
(43) Date of publication of application: **15.07.2020**
(21) Application number: 19219983.4
(22) Date of filing: 30.12.2019
(51) Int. Cl.: B65G 1/14, B65G 49/08, B65G 65/00, B65G 49/06, B65G 59/06

(54) **WORKPIECE TRANSFER APPARATUS**

(30) Priority: 10.01.2019 JP 2019002483
(71) Applicant: Toyota Boshoku Kabushiki Kaisha, Kariya-shi, Aichi 448-8651 (JP)
(72) Inventor: HARAGUCHI, Takuya, Kariya-shi, Aichi 448-8651 (JP)
(74) Representative: TBK

(57) **Abstract**

A workpiece transfer apparatus includes a belt conveyor, a rack, a lift mechanism, a removal mechanism, and a controller. The belt conveyor includes a belt having a transfer surface and is configured to move the belt in a transfer direction. The rack includes two opposing side panels and pairs of support grooves that support two ends of each of workpieces. The controller controls the lift mechanism and the removal mechanism to lift or lower the rack so that whenever one of the workpieces is removed from the rack with the removal mechanism, another one of the workpieces stored in the rack is moved to immediately above the transfer surface.

## Description

### BACKGROUND

### 1. Field

The present disclosure relates to a workpiece transfer apparatus.

### 2. Description of Related Art

A conventional separator for a fuel cell includes a supply manifold that supplies a reactive gas or a coolant, a discharge manifold that discharges the reactive gas or coolant, and a groove flow passage that connects the manifolds and circulates the reactive gas or coolant (for example, refer to Japanese Laid-Open Patent Publication No. 2018-98041). Such a separator for a fuel cell may include a base material formed by stamping a thin metal plate.

In a manufacturing process of the separator, there is a need for a transfer apparatus that transfers a workpiece, which forms a base material, to a subsequent process without deforming the workpiece.

### SUMMARY

One object of the present disclosure is to provide a workpiece transfer apparatus that transfers workpieces to a subsequent process without deforming the workpiece.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a workpiece transfer apparatus includes a belt conveyor, a rack, a lift mechanism, a removal mechanism, and a controller. The belt conveyor includes a belt having a transfer surface and is configured to move the belt in a transfer direction. The rack allows for storage of thin plate workpieces spaced apart from each other in a thickness-wise direction of the workpieces. The rack includes two opposing side panels and pairs of support grooves arranged on opposing surfaces of the two side panels to support two ends of each of the workpieces. The lift mechanism is configured to lift and lower the rack at a position where the pairs of the support grooves are arranged in a vertical direction and an extension direction of the support grooves coincides with the transfer direction. The removal mechanism is configured to apply external force in the extension direction of the support grooves to a side surface of one of the workpieces that is located immediately above the transfer surface, among the workpieces stored in the rack, so as to remove the one of the workpieces from the rack onto the transfer surface. The controller controls the lift mechanism and the removal mechanism to lift or lower the rack so that whenever one of the workpieces is removed from the rack with the removal mechanism, another one of the workpieces stored in the rack is moved to immediately above the transfer surface.

Other features and aspects will be apparent from the following detailed description, the drawings, and the claims.

### BRIEF DESCRIPTION OF THE DRAWINGS

Fig. 1 is a perspective view showing the structure of a workpiece transfer apparatus in accordance with one embodiment.
Fig. 2 is a perspective view of a workpiece transferred by the workpiece transfer apparatus of the embodiment shown in Fig. 1.
Fig. 3 is a perspective view showing an entire rack of the embodiment shown in Fig. 1.
Fig. 4 is a cross-sectional view taken along line 4-4 in Fig. 3.
Fig. 5 is a cross-sectional view taken along line 5-5 in Fig. 3.
Fig. 6 is a side view of the workpiece transfer apparatus in accordance with the embodiment shown in Fig. 1.
Fig. 7 is a perspective view showing a removal mechanism of the embodiment shown in Fig. 1.
Fig. 8A is a schematic diagram illustrating a removal process of a workpiece in the embodiment shown in Fig. 1 when an actuating portion is being inserted through a manifold hole.
Fig. 8B is a schematic diagram illustrating the removal process when the workpiece is being removed by the actuating portion.
Fig. 9A is a schematic diagram illustrating the removal process of a workpiece in the embodiment shown in Fig. 1 when the actuating portion is being pulled out from the manifold hole of the workpiece.
Fig. 9B is a schematic diagram illustrating the removal process when the actuating portion is being returned to an initial position.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

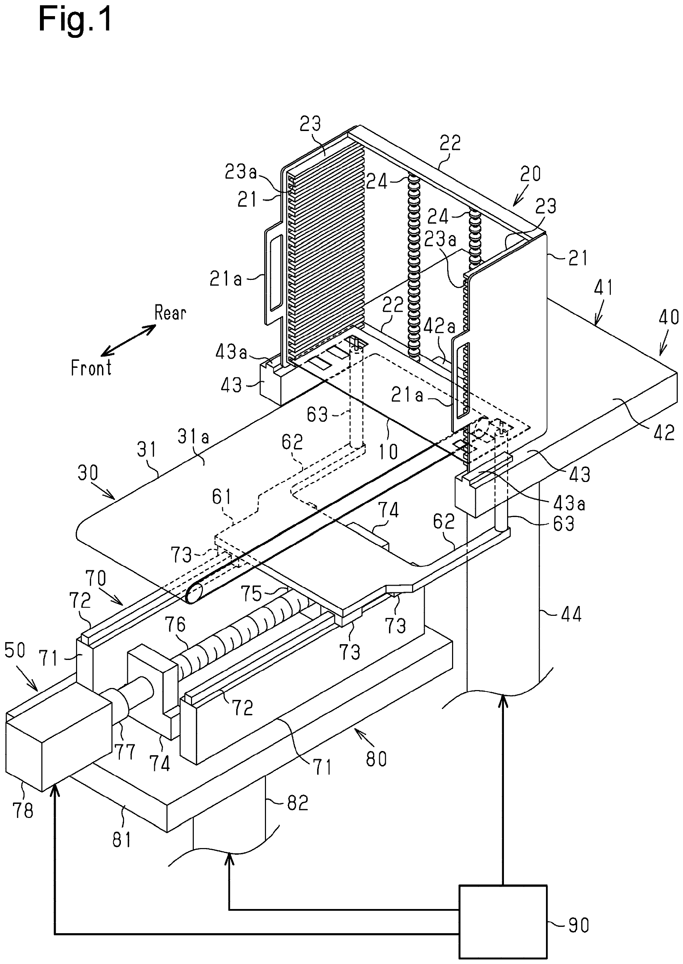

One embodiment will now be described with reference to Figs. 1 to 9B.

As shown in Fig. 1, a workpiece transfer apparatus includes a belt conveyor 30, a rack 20, a lift mechanism 40, a removal mechanism 50, and a controller 90. The belt conveyor 30 includes a belt 31 that has a transfer surface 31a and is configured to move the belt 31 in a transfer direction (that is, toward a transfer destination). The rack 20 allows for storage of thin plate workpieces 10. The lift mechanism 40 is configured to lift and lower the rack 20. The removal mechanism 50 is configured to remove the workpieces 10 one at a time from the rack 20 onto the transfer surface 31a of the belt 31. The controller 90 controls the lift mechanism 40 and the removal mechanism 50. Hereinafter, the transfer direction of the belt 31 will simply be referred to as the transfer direction, and a widthwise direction of the belt 31 will simply be referred to as the widthwise direction. Further, frontward and rearward in the transfer direction (leftward and rightward in Fig. 1) will simply be referred to as frontward and rearward.

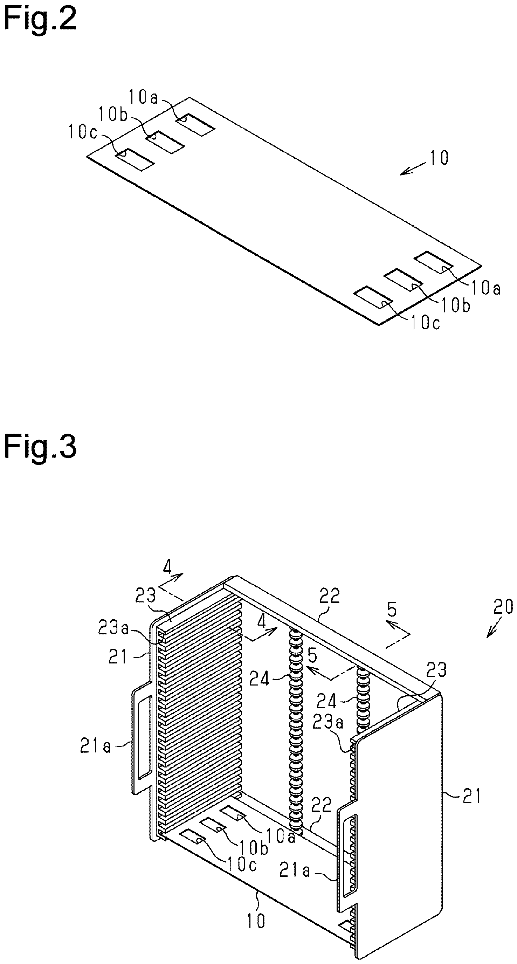

As shown in Fig. 2, the workpiece 10 in the present embodiment is a base material for a fuel cell separator and is a plate that is rectangular in a plan view. A plurality (three in the present embodiment) of manifold holes 10a to 10c extend through each of the longitudinal ends of the workpiece 10 in a thickness-wise direction. The workpiece 10 has a thickness of a few hundred micrometers and is formed by stamping a thin metal plate of stainless steel or the like.

The structure of the transfer apparatus will now be described.

### Belt Conveyor 30

As shown in Fig. 1, the dimension of the belt 31 of the belt conveyor 30 in the widthwise direction is smaller than the dimension of the workpiece 10 in a longitudinal direction of the workpiece 10.

### Rack 20

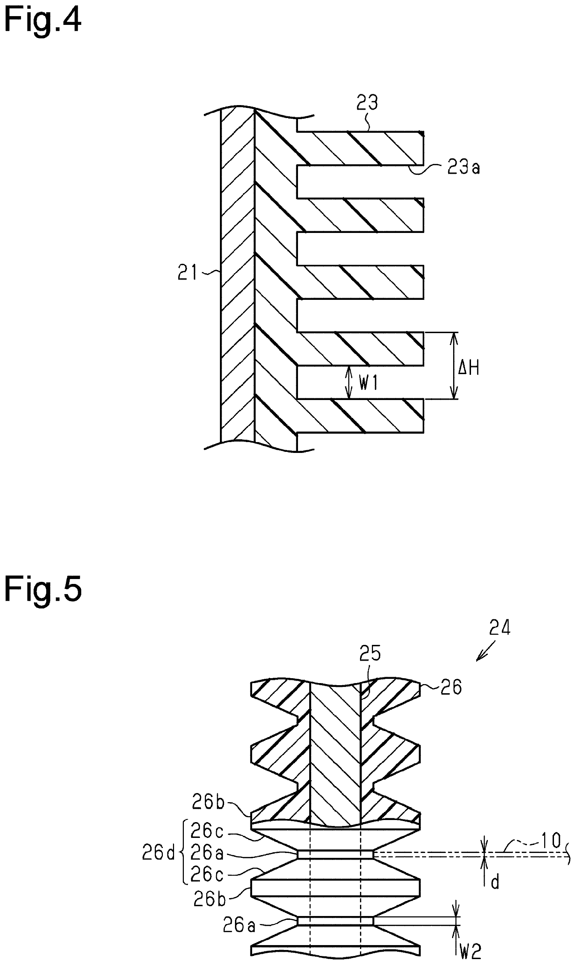

As shown in Figs. 3 and 4, the rack 20 allows for storage of workpieces 10 at predetermined distances ΔH in the thickness-wise direction of the workpieces 10. The rack 20 is used to, for example, simultaneously clean multiple workpieces 10.

The rack 20 includes a pair of side panels 21 and a pair of connecting members 22. The side panels 21 are rectangular and opposed to each other. The connecting members 22 extend in a direction in which the side panels 21 oppose each other, and connect first ends and second ends of the side panels 21 in a longitudinal direction. Each connecting member 22 is connected to a first end of each side panel 21 in a transverse direction. The side panels 21 and the connecting members 22 are formed from, for example, stainless steel.

A handle 21a projects from a second end of each side panel 21 in the transverse direction at longitudinally central portion of the side panel 21. The handle 21a is projected from the second end of each side panel 21 in the transverse direction away from the first end of the side panel 21 in the transverse direction. In the present embodiment, the side panel 21 and the handle 21a are formed integrally with each other. The side panels 21 and the connecting members 22 define an outer frame of the rack 20.

Each side panel 21 includes an opposing surface to which a grooved member 23 formed from a resin material is adhered and fixed.

Each grooved member 23 includes support grooves 23a extending in the transverse direction of the side panels 21. The support grooves 23a are spaced apart from one another in a vertical direction by the predetermined distance ΔH. The two longitudinal ends of each workpiece 10 are supported by a pair of corresponding support grooves 23a.

Each support groove 23a has two open ends in a direction in which the support groove 23a extends. The two longitudinal ends of a workpiece 10 can enter and exit the opening of the support groove 23a at one end (side of handle 21a) in the extension direction of the support groove 23a.

As shown in Fig. 4, each support groove 23a has a width W1 (dimension in vertical direction as viewed in Fig. 4) that is constant in the extension direction of the support groove 23a.

As shown in Fig. 3, two restriction posts 24 arranged between the two connecting members 22 are spaced apart from each other in the opposing direction of the side panels 21. Each restriction post 24 extends in the longitudinal direction of the side panel 21. The restriction posts 24 restrict movement of each workpiece 10 toward the first ends of the side panels 21 in the transverse direction of the side panels 21 and toward opposite sides in the direction in which the workpieces 10 are arranged (vertical direction as viewed in Fig. 3).

As shown in Fig. 5, each restriction post 24 includes a cylindrical core 25 and a cover 26. The core 25 is formed from a metal material and connected to the two connecting members 22. The cover 26 is formed from a resin material and covers the entire circumference of the core 25.

The cover 26 includes a plurality of small diameter portions 26a and a plurality of large diameter portions 26b. The small diameter portions 26a are arranged at equal intervals in an axial direction of the core 25. Each large diameter portion 26b is arranged between two adjacent small diameter portions 26a and has an outer diameter that is greater than the small diameter portion 26a. Further, the cover 26 includes a plurality of inclined portions 26c. Each inclined portion 26c extends between a small diameter portion 26a and the adjacent large diameter portion 26b and has an outer diameter that continuously increases from the small diameter portion 26a toward the large diameter portion 26b.

One small diameter portion 26a and two inclined portions 26c adjacent to the small diameter portion 26a define a restriction recess 26d. The small diameter portion 26a has a width W2 that is greater than a thickness "d" of the workpiece 10 (W2 > d).

Contact of the first end of a workpiece 10 in the transverse direction of the workpiece 10 with the small diameter portion 26a of a restriction recess 26d restricts movement of the workpiece 10 toward the first ends of the side panels 21 in the transverse direction of the side panels 21 and toward opposite sides in the direction in which the workpieces 10 are arranged.

### Lift Mechanism 40

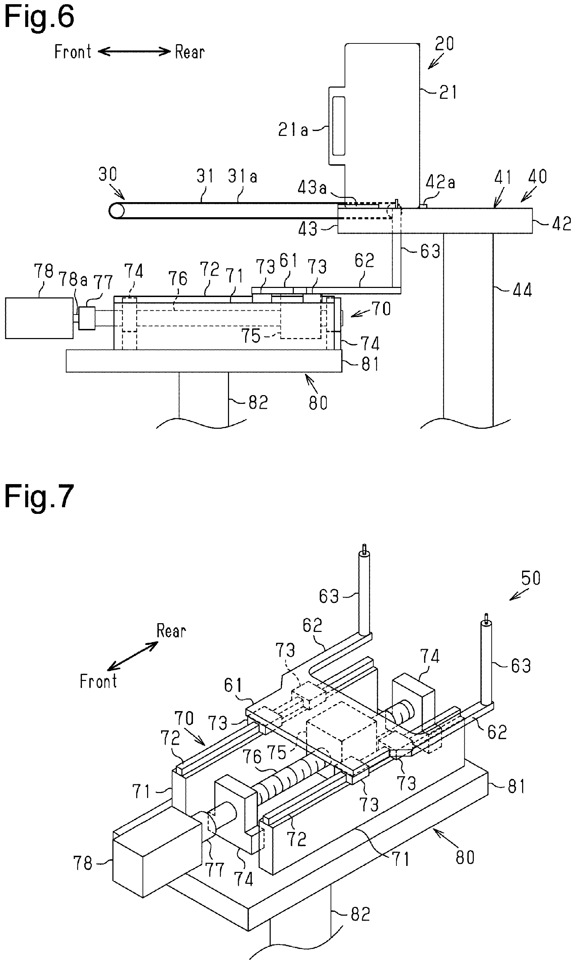

As shown in Figs. 1 and 6, the lift mechanism 40 includes a leg 44 and a lifting table 41. The leg 44 extends in the vertical direction and is lifted and lowered by an actuator (not shown). The lifting table 41 is coupled to an upper end of the leg 44 and supports the rack 20.

The lifting table 41 includes a table main body 42 and two supports 43. The supports 43 extend toward the front from two widthwise ends of the table main body 42. The lifting table 41 is substantially U-shaped in a plan view.

A restriction projection 42a is arranged on the front part of the table main body 42 at a central portion in the widthwise direction to restrict rearward movement of the rack 20. Further, a restriction projection 43a is arranged on each support 43 at a central portion in a widthwise direction to restrict movement of the rack 20 toward opposite sides in the widthwise direction.

The rack 20 is supported from the lower side by the lifting table 41 at a position where the support grooves 23a are arranged in the vertical direction and the extension direction of the support grooves 23a coincides with the transfer direction. Specifically, the front end of the table main body 42 supports a lower surface of the lower connecting member 22. Further, the two supports 43 respectively support the lower surfaces of the two side panels 21.

The belt 31 includes an upstream (rear) end in the transfer direction that is located between the two supports 43 in front of the table main body 42. Therefore, when the lifting table 41 is lifted and lowered, the two side panels 21 of the rack 20 are lifted and lowered at the two widthwise sides of the upstream end of the belt 31. Further, in a state in which a workpiece 10 is stored in the rack 20, the manifold holes 10a to 10c of the workpiece 10 are each located at the outer side of the two widthwise ends of the belt 31.

### Removal Mechanism 50

As shown in Fig. 1, the removal mechanism 50 is arranged below the belt 31 in front of the lift mechanism 40.

As shown in Figs. 1 and 7, the removal mechanism 50 includes two actuating portions 63, a slide portion 70, and a lifting portion 80. The two actuating portions 63 extend in the vertical direction. The slide portion 70 slides the actuating portions 63 in the extension direction of the support grooves 23a of the rack 20 (transfer direction). The lifting portion 80 lifts and lowers the actuating portions 63.

The lifting portion 80 includes a leg 82 and a lifting table 81. The leg 82 extends in the vertical direction and is lifted and lowered by an actuator (not shown). The lifting table 81 is coupled to an upper end of the leg 82.

As shown in Fig. 7, the slide portion 70 includes a pair of walls 71, a pair of rails 72, and four guide blocks 73. The walls 71 extend in the transfer direction and are spaced apart from each other in a widthwise direction. The rails 72 extend in the transfer direction and are each arranged on an upper surface of the corresponding wall 71. The guide blocks 73 are each movably supported by rolling elements (not shown) along the rails 72.

Each wall 71 is fixed on the upper surface of the lifting table 81.

Two guide blocks 73 are arranged on each rail 72 spaced apart from each other in the transfer direction.

A pair of support members 74 are arranged between the two walls 71 spaced apart from each other in the transfer direction. Each support member 74 is fixed to the upper surface of the lifting table 81.

A ball screw 76 extends in the transfer direction and is rotatably supported by the support members 74. A substantially box-shaped nut 75 is engaged with the ball screw 76 between the support members 74.

An output shaft 78a of a servo motor 78 is connected by a coupling 77 to a front end of the ball screw 76. Therefore, when the servo motor 78 drives and rotates the ball screw 76, the nut 75 moves in the transfer direction.

A base plate 61 is fixed to the upper surfaces of the guide blocks 73 and the upper surface of the nut 75.

The base plate 61 includes a pair of arms 62 that extend rearward from the two widthwise ends of the base plate 61. The arms 62 are located at opposite sides of the belt 31 (refer to Fig. 1) in the widthwise direction. Each actuating portion 63 is arranged on an upper surface of the distal end of one of the arms 62. Each actuating portion 63 is cylindrical and includes an upper end having a smaller diameter than other parts of the actuating portion 63.

In the removal mechanism 50, when the ball screw 76 is rotated, the nut 75 slides the base plate 61 and the actuating portions 63. In this case, the guide blocks 73 guide the base plate 61 along the rails 72, that is, the guide blocks 73 guide the base plate 61 in the transfer direction.

The speed at which the slide portion 70 slides the actuating portions 63 is set to be the same as the speed at which the belt conveyor 30 moves the belt 31.

### Controller 90

The lift mechanism 40 and the removal mechanism 50 are electrically connected to the controller 90. The controller 90 controls the actuator for the leg 44 of the lift mechanism 40, the servo motor 78 of the slide portion 70, and the actuator for the leg 82 of the lifting portion 80. The controller 90 can be circuitry that includes 1) at least one processor running on a computer program (software), 2) at least one exclusive hardware circuit such as an application specific integrated circuit (ASIC) to execute at least part of a process, or 3) a combination of the above. A processor includes a CPU and a memory such as a RAM and a ROM. The memory stores program codes or commands that are configured to have the CPU execute processes. The memory, which is a computer readable medium, may be any available medium that is accessible by a versatile or a dedicated computer.

The controller 90 controls the lift mechanism 40 and the removal mechanism 50 to lower the rack 20 for the predetermined distance ΔH so that whenever the removal mechanism 50 removes one workpiece 10 from the rack 20, another one of the workpieces 10 stored in the rack 20 is moved to immediately above the transfer surface 31a of the belt 31.

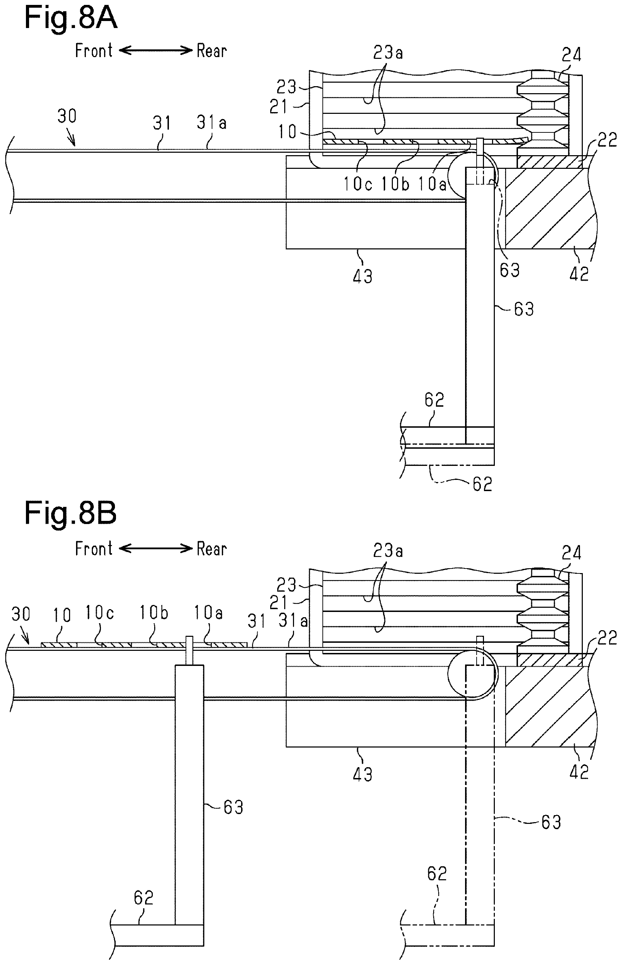

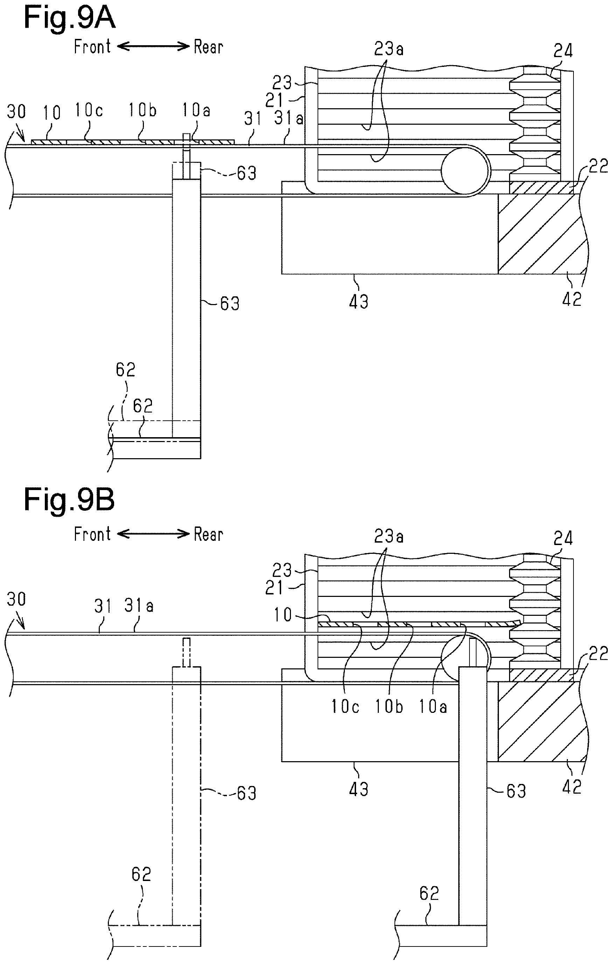

With reference to Figs. 8A, 8B, 9A, and 9B, a process for removing the workpiece 10 from the rack 20 onto the transfer surface 31a of the belt 31, which is performed by the controller 90 that controls the lift mechanism 40 and the removal mechanism 50, will now be described. The drawings have not been drawn to scale to simplify illustration.

First, as shown in Fig. 8A, the height of the rack 20 (height of table main body 42) at an initial position is set so that the support grooves 23a of the lowermost stage of the rack 20 are located immediately above the transfer surface 31a of the belt 31. Further, as indicated by the double-dashed lines in Fig. 8A, the initial position of the actuating portions 63 is set so that the upper ends of the actuating portions 63 are located below the transfer surface 31a of the belt 31.

Then, as shown by the solid lines in Fig. 8A, the lifting portion 80 lifts the two actuating portions 63 from the initial position and inserts the pair of actuating portions 63 through one pair of the two manifold holes 10a in the workpiece 10 that is stored in the support grooves 23a of the lowermost stage of the rack 20. In this case, the distal ends of the two actuating portions 63 are located above the transfer surface 31a of the belt 31.

Subsequently, as shown in Fig. 8B, the slide portion 70 slides the two actuating portions 63 forward. This presses each actuating portion 63 against a wall surface of the corresponding manifold hole 10a. That is, each actuating portion 63 is pressed against the workpiece 10 at a position that is closer to the restriction posts 24 than the central portion in the extension direction of the support grooves 23a. This applies external force acting frontward to the workpiece 10 so that the workpiece 10 can be removed from the rack 20. In this case, when the center of gravity of the workpiece 10 shifts frontward from the support grooves 23a of the rack 20, the front edge of the workpiece 10 droops downward because of its weight and contacts the transfer surface 31a of the belt 31. As described above, the sliding speed of the actuating portion 63 is the same as the transfer speed of the belt 31 of the belt conveyor 30. Thus, thereafter, the workpiece 10 will be moved by both the belt 31 and the actuating portions 63. Then, when the entire workpiece 10 is removed from the support grooves 23a by the actuating portions 63, the lower surface of the workpiece 10 is placed on the transfer surface 31a of the belt 31.

Next, as shown in Fig. 9A, when the actuating portions 63 reach a predetermined position, the lifting portion 80 lowers the actuating portions 63 and pulls out the actuating portions 63 from the manifold holes 10a in the workpiece 10. In this case, the actuating portions 63 stop sliding at the predetermined position and wait for a predetermined amount of time before being lowered. During the predetermined amount of time, the belt 31 moves the workpiece 10 forward so that the front wall surfaces of the manifold holes 10a in the workpiece 10 move away from the actuating portions 63. Then, before the rear wall surfaces of the manifold holes 10a come into contact with the actuating portions 63, the actuating portions 63 are lowered so that the actuating portions 63 are smoothly pulled out of the manifold holes 10a in the workpiece 10.

Further, in this case, the rack 20 is lowered the predetermined distance ΔH simultaneously with the actuating portions 63 being lowered so that the support grooves 23a located one stage above the support grooves 23a of the lowermost stage of the rack 20 will be located immediately above the transfer surface 31a of the belt 31.

Subsequently, as shown in Fig. 9B, the slide portion 70 slides the actuating portions 63 rearward to return to the initial position.

Thereafter, the above described series of procedures are repeated so that the workpieces 10 are removed one at a time from the rack 20.

The operation and advantages of the present embodiment will now be described.
(1) The transfer apparatus for the workpiece 10 includes the belt conveyor 30 and the rack 20. The belt conveyor 30 includes the belt 31 having the transfer surface 31a and is configured to move the belt 31 in the transfer direction. The rack 20 includes pairs of the support grooves 23a to support two ends of the workpieces 10. Further, the transfer apparatus includes the lift mechanism 40 and the removal mechanism 50. The lift mechanism 40 is configured to lift and lower the rack 20. The removal mechanism 50 is configured to remove a workpiece 10 from the rack 20 onto the transfer surface 31a by applying external force in the extension direction of the support grooves 23a to the side surface of the one of the workpieces 10 located immediately above the transfer surface 31a, among the workpieces 10 stored in the rack 20, so as to remove the workpiece 10 from the rack 20. Moreover, the transfer apparatus includes the controller 90 that controls the lift mechanism 40 and the removal mechanism 50 to lower the rack 20 whenever the removal mechanism 50 removes one workpiece 10 from the rack 20 so that another workpiece 10 stored in the rack 20 is moved to immediately above the transfer surface 31a.
   With this structure, the removal mechanism 50 applies external force in the extension direction of the support groove 23a of the rack 20 to the side surface of the one of the workpieces 10 that is located immediately above the transfer surface 31a of the belt 31, among the workpieces 10 stored in the rack 20, to remove the workpiece 10 from the rack 20. In this way, the workpiece 10 is removed from the rack 20 onto the transfer surface 31a. Further, the removed workpiece 10 is transferred to a transfer destination by the belt conveyor 30.
   Also, whenever the removal mechanism 50 removes one workpiece 10 from the rack 20, the lift mechanism 40 lowers the rack 20 so that another workpiece 10 stored in the rack 20 is moved to immediately above the transfer surface 31a of the belt 31. This allows the removal mechanism 50 to remove the next workpiece 10 from the rack 20.
   When such actions are repeatedly performed, the workpieces 10 stored in the rack 20 are removed one at a time onto the transfer surface 31a of the belt 31 and moved to a transfer destination.
   The removal mechanism 50 applies external force in the extension direction of the support groove 23a to the side surface of a workpiece 10. Thus, the removal mechanism 50 will not deform the workpiece 10 when contacting the workpiece 10.
(2) The workpiece 10 includes the manifold holes 10a. The removal mechanism 50 includes the actuating portions 63, the lifting portion 80, and the slide portion 70. The actuating portions 63 extend in the vertical direction. The lifting portion 80 lifts and lowers the actuating portions 63. The slide portion 70 slides the actuating portions 63 in the extension direction of the support groove 23a. The removal mechanism 50 is configured to lift and lower the actuating portions 63 with the lifting portion 80 so as to insert the actuating portions 63 through the through holes in the workpiece 10 and slide the actuating portions 63 with the slide portion 70 so as to apply external force to the workpiece 10 and press the actuating portions 63 against wall surfaces of the manifold holes 10a in the workpiece 10.
   With this structure, the actuating portions 63 are inserted through the manifold holes 10a in the workpiece 10 when the lifting portion 80 lifts or lowers the actuating portions 63 and the actuating portions 63 are pressed against the wall surfaces of the manifold holes 10a of the workpiece 10 to apply external force when the slide portion 70 slides the actuating portions 63 for removal of the workpieces 10. In this way, even when the shape of the rack 20 hinders the employment of a structure that pushes the outer side surface of the workpiece 10, the workpiece 10 can be using the manifold holes 10a of the workpiece 10 to remove the workpieces 10.
   In addition, the removal mechanism 50 includes the lifting portion 80 that lifts and lowers the actuating portions 63 so that if the actuating portions 63 are lowered and then pulled out of the manifold holes 10a in the workpiece 10 after the workpiece 10 is removed from the rack 20, the workpiece 10 will smoothly be placed onto the transfer surface 31a of the belt 31. This smoothly transfers the workpiece 10.
   Moreover, the slide portion 70 slides the actuating portions 63 for a smaller amount than a structure that pushes the actuating portions 63 against the outer rear side surface of the workpiece 10. This allows the amount of time required for removal of the workpiece 10 to be shortened and the removal mechanism 50 to be reduced in size.
(3) The pair of actuating portions 63 are inserted through the pair of the manifold holes 10a in the workpiece 10.
   For example, if a workpiece 10 were to be removed from the rack 20 by inserting only one actuating portion 63 through one manifold hole 10a of the workpiece 10, the workpiece 10 may rotate about the actuating portion 63. In such a case, the workpiece 10 may not be removed smoothly.
   In this respect, the above structure does not cause such rotation of the workpiece 10. Thus, the workpiece 10 can be smoothly removed from the rack 20.
(4) The rack 20 includes the restriction posts 24 that restrict movement of the workpieces 10 towards opposite sides in the direction in which the workpieces 10 are arranged. The restriction posts 24 are arranged between the two side panels 21 at a side opposite to the side from which the workpiece 10 is removed in the extension direction of the support groove 23a. The actuating portions 63 apply external force to the wall surfaces of the manifold holes 10a. That is, the actuating portions 63 apply external force to portions of the workpiece 10 closer to the restriction posts 24 than the central portion in the extension direction of the support grooves 23a.
   With this structure, the restriction posts 24 restrict drooping of the portion of the workpiece 10 closer to the restriction posts 24 than the central portion in the extension direction of the support groove 23a that would result from the weight of the workpiece 10. This minimizes differences in the distance between adjacent workpieces 10 at the side of the restriction posts 24. Thus, the actuating portions 63 will not apply external force simultaneously to both a workpiece 10 and the workpiece 10 located above that workpiece 10, and two workpieces 10 will thereby not be removed together. Therefore, the workpieces 10 can be easily removed from the rack 20 one at a time.
   Further, the above structure allows for the setting of a small distance between adjacent workpieces 10, which are stored in the rack 20. This increases the number of the workpieces 10 that can be stored in one rack 20.
(5) The rack 20 includes the connecting members 22 that connect the two side panels 21 only at the side opposite to the side from which the workpiece 10 is removed in the extension direction of the support grooves 23a. The lift mechanism 40 lowers the rack 20 whenever the removal mechanism 50 removes one workpiece 10 from the rack 20. The upstream end of the belt 31 of the belt conveyor 30 is arranged between the two side panels 21 of the rack 20.

With such a structure, the upstream end of the belt 31 can be positioned to overlap with the workpieces 10, which are stored in the rack 20, in the vertical direction. This ensures removal of the workpieces 10 stored in the rack 20 onto the transfer surface 31a of the belt 31.

The present embodiment may be modified as follows. The present embodiment and the following modifications can be combined as long as the combined modifications remain technically consistent with each other.

The rack 20 does not have to be lowered at the same time as when the actuating portions 63 are lowered. The rack 20 may be lowered, for example, after the actuating portions 63 are lowered.

The transfer speed of the belt 31 of the belt conveyor 30 may be slightly higher than the sliding speed of the actuating portion 63. This allows the predetermined amount of time during which the actuating portions 63 are stopped to be shortened.

The upstream end of the belt 31 of the belt conveyor 30 may be located in front of the rack 20.

The workpieces 10 may be sequentially removed from the one stored in the support grooves 23a of the uppermost stage of the rack 20 as the lift mechanism 40 lifts the rack 20. In this case, the actuating portions 63 of the removal mechanism 50 are configured to be inserted through the manifold holes 10a of the workpiece 10 from above the rack 20, and the belt conveyor 30 is located in front of the lift mechanism 40. In this case, the belt conveyor 30 may have a width that is greater than the distance between the actuating portions 63.

The restriction posts 24 may only restrict movement of the workpiece 10 toward opposite sides in the arrangement direction.

The manifold holes 10b or the manifold holes 10c of the workpiece 10 may be used to remove the workpiece 10 from the rack 20. Further, the manifold holes through which the actuating portions 63 are inserted may be changed to any of the manifold holes 10a to 10c.

The workpiece 10 may be removed from the rack 20, for example, by inserting one of the actuating portions through one of the manifold holes or inserting three or more actuating portions respectively through three or more manifold holes.

The removal mechanism may be configured to push the rear outer side surface of the workpiece 10 toward the front.

The workpiece 10 is not limited to a base material for a separator of a fuel cell. For example, the workpiece 10 may be a workpiece that is a flexible thin plate formed from a metal material or a resin material. Even in this case, the workpiece can be transferred by the workpiece transfer apparatus of the present embodiment.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

A workpiece transfer apparatus includes a belt conveyor, a rack, a lift mechanism, a removal mechanism, and a controller. The belt conveyor includes a belt having a transfer surface and is configured to move the belt in a transfer direction. The rack includes two opposing side panels and pairs of support grooves that support two ends of each of workpieces. The controller controls the lift mechanism and the removal mechanism to lift or lower the rack so that whenever one of the workpieces is removed from the rack with the removal mechanism, another one of the workpieces stored in the rack is moved to immediately above the transfer surface.

## Claims

1. A workpiece transfer apparatus, being **characterized by**:
a belt conveyor (30) that includes a belt (31) having a transfer surface (31a) and is configured to move the belt (31) in a transfer direction;
a rack (20) allowing for storage of thin plate workpieces (10) spaced apart from each other in a thickness-wise direction of the workpieces, wherein the rack (20) includes two opposing side panels (21) and pairs of support grooves (23a) arranged on opposing surfaces of the two side panels (21) to support two ends of each of the workpieces (10);
a lift mechanism (40) configured to lift and lower the rack (20) at a position where the pairs of the support grooves (23a) are arranged in a vertical direction and an extension direction of the support grooves (23a) coincides with the transfer direction;
a removal mechanism (50) configured to apply an external force in the extension direction of the support grooves (23a) to a side surface of one of the workpieces (10) that is located immediately above the transfer surface (31a), among the workpieces (10) stored in the rack (20), so as to remove the one of the workpieces (10) from the rack (20) onto the transfer surface (31a); and
a controller (90) that controls the lift mechanism (40) and the removal mechanism (50) to lift or lower the rack (20) so that whenever one of the workpieces (10) is removed from the rack (20) with the removal mechanism (50), another one of the workpieces (10) stored in the rack (20) is moved to immediately above the transfer surface (31a).

2. The workpiece transfer apparatus according to claim 1, being **characterized in that**
each of the workpieces (10) includes a through hole (10a),
the removal mechanism (50) includes an actuating portion (63) extending in the vertical direction, a lifting portion (80) that lifts and lowers the actuating portion (63), and a slide portion (70) that slides the actuating portion (63) in the extension direction of the support grooves (23a),
the removal mechanism (50) is configured to insert the actuating portion (63) through the through hole (10a) of the one of the workpieces (10) located immediately above the transfer surface (31a) by lifting or lowering the actuating portion (63) with the lifting portion (80), and
the removal mechanism (50) is configured to apply the external force by sliding the actuating portion (63) with the slide portion (70) to press the actuating portion (63) against a wall surface of the through hole (10a) in the one of the workpieces (10).

3. The workpiece transfer apparatus according to claim 2, being **characterized in that**
the through hole is one of through holes (10a, 10b, 10c) arranged in each of the workpieces (10), and
the actuating portion is one of actuating portions (63) arranged on the removal mechanism (50), the actuation portions (63) are respectively inserted through the through holes (10a, 10b, 10c).

4. The workpiece transfer apparatus according to any one of claims 1 to 3, being **characterized in that**
the rack (20) includes a restriction post (24) that restricts movement of the workpieces (10) toward opposite sides in a direction in which the workpieces (10) are arranged, the restriction post (24) is arranged between the two side panels (21) at a side opposite to a side from where the workpieces (10) are removed in the extension direction of the support grooves (23a), and
the removal mechanism (50) is configured to apply the external force to the one of the workpieces (10) located immediately above the transfer surface (31a) at a portion closer to the restriction post (24) than a central portion in the extension direction of the support grooves (23a).

5. The workpiece transfer apparatus according to any one of claims 1 to 4, being **characterized in that**
the rack (20) includes a connecting member (22) that connects the two side panels (21) only at a side opposite to a side from where the workpieces (10) are removed in the extension direction of the support grooves (23a),
the lift mechanism (40) lowers the rack (20) whenever the removal mechanism (50) removes one of the workpieces (10) from the rack (20), and
the belt (31) includes an upstream end in the transfer direction arranged between the two side panels (21) of the rack (20).
